Europäisches Patentamt

European Patent Office

Office européen des brevets

(19)

(11) Veröffentlichungsnummer: **0 309 854 B1**

(12) **EUROPÄISCHE PATENTSCHRIFT**

(45) Veröffentlichungstag der Patentschrift: **04.11.92**

(51) Int. Cl.⁵: **G07C 7/00**, G07C 5/12

(21) Anmeldenummer: **88115340.7**

(22) Anmeldetag: **19.09.88**

(54) **Registriergerät mit einem flachen Einbaugehäuse.**

(30) Priorität: **30.09.87 DE 3733151**

(43) Veröffentlichungstag der Anmeldung:
**05.04.89 Patentblatt 89/14**

(45) Bekanntmachung des Hinweises auf die
Patenterteilung:
**04.11.92 Patentblatt 92/45**

(84) Benannte Vertragsstaaten:
**DE ES FR GB IT**

(56) Entgegenhaltungen:
**EP-A- 0 196 691      DE-A- 1 266 036**
**DE-A- 1 548 685      DE-A- 3 313 770**
**US-A- 3 318 109      US-A- 4 412 704**

(73) Patentinhaber: **Mannesmann Kienzle GmbH**
**Postfach 1640**
**W-7730 Villingen-Schwenningen(DE)**

(72) Erfinder: **Helmschrott, Norbert**
**Wasenstrasse 94**
**W-7730 Villingen-Schwenningen(DE)**
Erfinder: **Höni, Helmut**
**Schwommberg 6**
**W-7239 Fluorn-Winzeln(DE)**

## Beschreibung

Die Erfindung betrifft ein Registriergerät mit einem flachen Einbaugehäuse, dessen eine Schmalseite die Frontseite des Registriergerätes bildet, mit einer mit Zentrier- und Mitnahmemitteln für die als Aufzeichnungsträger dienenden Diagrammscheiben versehenen Diagrammscheibenaufnahme und mit Mitteln, welche einen Transport der Diagrammscheibenaufnahme im wesentlichen rechtwinklig zur Frontseite des Registriergerätes zwischen einer Registrierposition innerhalb des Gehäuses und einer Einlege- bzw. Entnahmeposition außerhalb des Gehäuses gestatten.

Bei Registriergeräten, insbesondere solchen, in denen Diagrammscheiben als Aufzeichnungsträger Anwendung finden, wird, um den Anforderungen an die Einbaufähigkeit in Armaturenbrettern und Instrumententafeln sowie an ein universell verwendbares Registriermodul gerecht werden zu können, eine möglichst niedrige Bauhöhe angestrebt.

Die niedrige Bauhöhe wurde, wie die DE-PS 12 66 036 zeigt, beispielsweise dadurch zu verwirklichen versucht, daß an der Frontwand des betreffenden Registriergerätes lediglich ein Schlitz zum Eingeben und Entnehmen der Diagrammscheiben ausgebildet war. Bei einer derartigen Lösung lag es nahe, das Zentrieren und zeitrichtige Ausrichten einer eingegebenen Diagrammscheibe im Gegensatz zu der in der genannten Patentschrift gezeigten Lösung selbsttätig vorzunehmen und zusätzlich innerhalb des Registriergerätes eine geeignete Einrichtung für den Transport der Diagrammscheibe in die Zentrierposition vorzusehen.

Zweifellos ist bei einem Konzept, bei dem beim Zuführen einer Diagrammscheibe diese sozusagen der zuführenden Hand entnommen wird, die Handhabung vereinfacht und weitgehend unabhängig von der subjektiven Sorgfalt des Bedienenden. Dieser Effekt macht jedoch eine Transporteinrichtung sowie eine Einrichtung erforderlich, die bewirkt, daß eine eingegebene Diagrammscheibe zeitrichtig auf den Zentrier- und Mitnahmemitteln aufgenommen wird. Dabei müssen die Zentrier- und Mitnahmemittel senkrecht zum Diagrammscheibenführungsschacht verschwenkbar angeordnet sein. Der technische Aufwand für dieses Konzept ist somit hoch und für eine Vielzahl von Anwendungsfällen ungeeignet.

Da außerdem eine visuelle Kontrolle der Lage einer aufgenommenen Diagrammscheibe nicht möglich ist und beispielsweise bei einem Verkanten und Hängenbleiben einer Diagrammscheibe ein Totalausfall des Registriergerätes die Folge wäre, müssen zusätzlich verschiedene Funktionskontrollmittel vorgesehen werden. Hinzu kommt, daß das, was wünschenswert wäre, wahlweise Verwenden von Einzel- und Bündeldiagrammscheiben zusätzlich technischen Aufwand erfordern würde und die erzielbare Mindestbauhöhe im wesentlichen durch den für die Aufnahme einer durch den Schlitz eingegebenen Diagrammscheibe heb- und senkbaren Zentrier- und Mitnahmedorn bestimmt ist.

Es stellt sich somit die Aufgabe, ein Registriergerät der eingangs genannten Gattung von niedriger Bauhöhe zu schaffen, bei dem bezüglich Inregistrierpositionbringen der Diagrammscheibe Handhabungsaufwand, technischer Aufwand und Positioniersicherheit besser optimiert sind.

Die gefundene Lösung geht aus von einem Registriergerät gemäß der DE-PS 15 48 685, bei dem die Diagrammscheibenaufnahme zwischen einer Registrierposition innerhalb des Gehäuses des Registriergerätes und einer Einlegeposition außerhalb des Gehäuses transportierbar ist und das Zentrieren einer Diagrammscheibe auf der Diagrammscheibenaufnahme von Hand erfolgt. Dadurch wird, abgesehen von dem von Hand vorzunehmenden Transport der Diagrammscheibe in die Registrier- bzw. Entnahmeposition zwar die Handhabung der Diagrammscheiben beim Einlegen und Entnehmen gegenüber einem Eingeben in einen Schlitz einerseits in einem gewiß zumutbaren Rahmen aufwendiger, andererseits aber auch sicherer und ohne technischen Aufwand, d. h. visuell kontrollierbar. Außerdem wird die technisch aufwendige Bewegung der Diagrammscheibenaufnahme senkrecht zur Diagrammscheibe vermieden. Von Nachteil ist die relativ große Bauhöhe, die dadurch bedingt ist, daß das gesamte Laufwerk für den Registrierantrieb der Diagrammscheibe der Diagrammscheibenaufnahme bzw. deren Träger zugeordnet ist. Außerdem sind für den antreibenden Motor flexible elektrische Verbindungen vorzusehen, die von vornherein ein gewisses Funktionsrisiko darstellen.

Die Lösung der gestellten Aufgabe sieht vor, daß ein den Registrierantrieb der Diagrammscheiben liefernder Motor ortsfest in dem Registriergerät angeordnet ist und daß zwischen dem Motor und der Diagrammscheibenaufnahme ein Getriebe vorgesehen ist, derart daß der Registrierantrieb der Diagrammscheiben in jeder Stellung der Diagrammscheibenaufnahme gewährleistet ist.

Ein bevorzugtes Ausführungsbeispiel ist dadurch gekennzeichnet, daß das Getriebe zwischen dem Motor und der Diagrammscheibenaufnahme eine auf einer Profilwelle verschiebbar angeordnete Schnecke umfaßt und daß die Diagrammscheibenaufnahme und die sie mit der verschiebbaren Schnecke verbindende Getriebekette an einem Träger gelagert sind, welcher einerseits die Registrierunterlage bildet, andererseits im Gehäuse des Registriergerätes verschiebbar geführt ist.

Der Vorteil, den die Erfindung bietet, ist darin zu sehen, daß durch das ortsfeste Anordnen des die Diagrammscheibenaufnahme antreibenden, eine relativ flache, schlittenartig im Gehäuse des Registriergerätes verschiebbare, der Diagrammscheibe als Registrierunterlage und der Diagrammscheibenaufnahme und dem diese antreibenden Getriebezweig als Träger dienende Baueinheit bildbar ist, daß ferner die Handhabung durch einen motorischen Antrieb des Trägers der Diagrammscheibenaufnahme erleichtert ist und daß auf einfachste Weise eine Kaskadierung von mehreren Diagrammscheibenaufnahmen mit jeweils einem Motor für den Registrierantrieb und den Trägertransport möglich ist. Durch das erfindungsgemäße Konzept sind auch die Fertigungskosten im Vergleich zu einem Registriergerät mit Eingabe der Diagrammscheibe durch einen Schlitz drastisch reduzierbar.

Im folgenden sei die Erfindung anhand der Zeichnungen näher erläutert. Es zeigen

FIGUR 1 eine Frontansicht eines Registriergerätes, bei dem die Diagrammscheibe mittels eines Trägers von und zur Registrierposition transportiert wird,

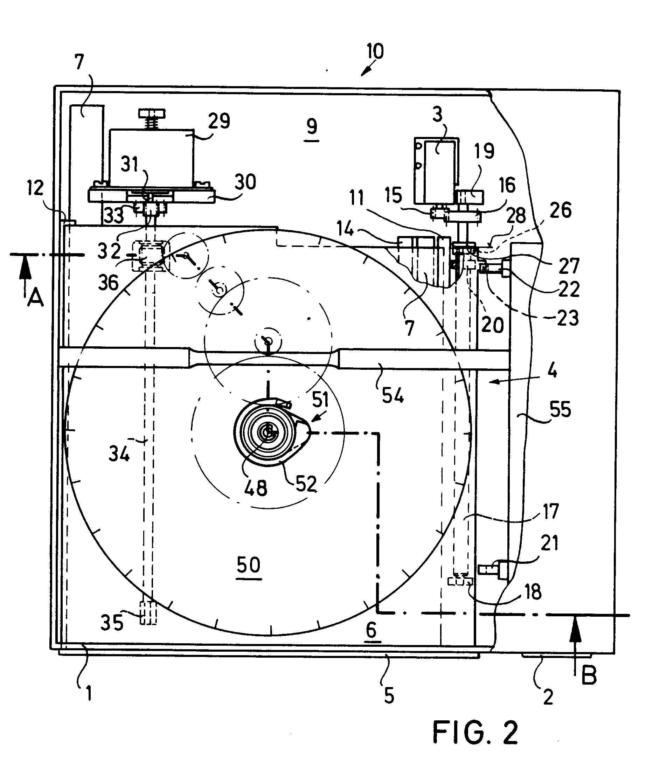

FIGUR 2 eine Draufsicht auf das teilweise aufgebrochene Registriergerät mit einer in Registrierposition befindlichen Diagrammscheibe,

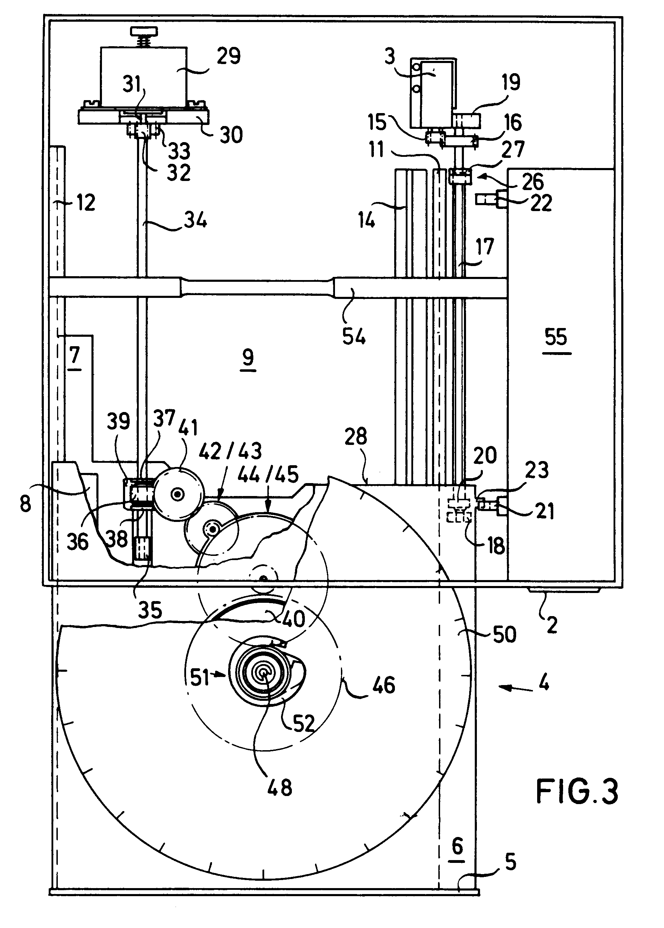

FIGUR 3 eine Draufsicht auf das teilweise geschnittene Registriergerät mit in Entnahmeposition befindlicher Diagrammscheibe,

FIGUR 4 eine Schnittdarstellung des Trägers gemäß der Schnittlinie A-B in FIGUR 2,

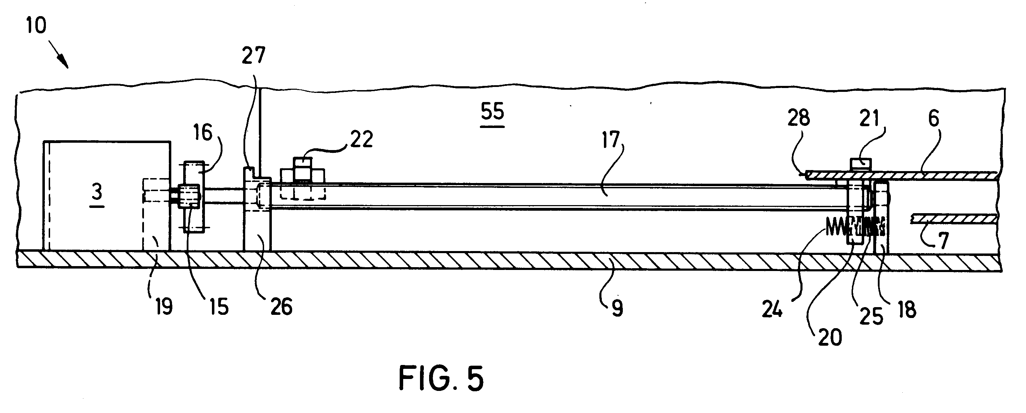

FIGUR 5 eine Ansicht des Trägerantriebs,

FIGUR 6 eine schematische Darstellung eines Registriergerätes mit zwei Trägern.

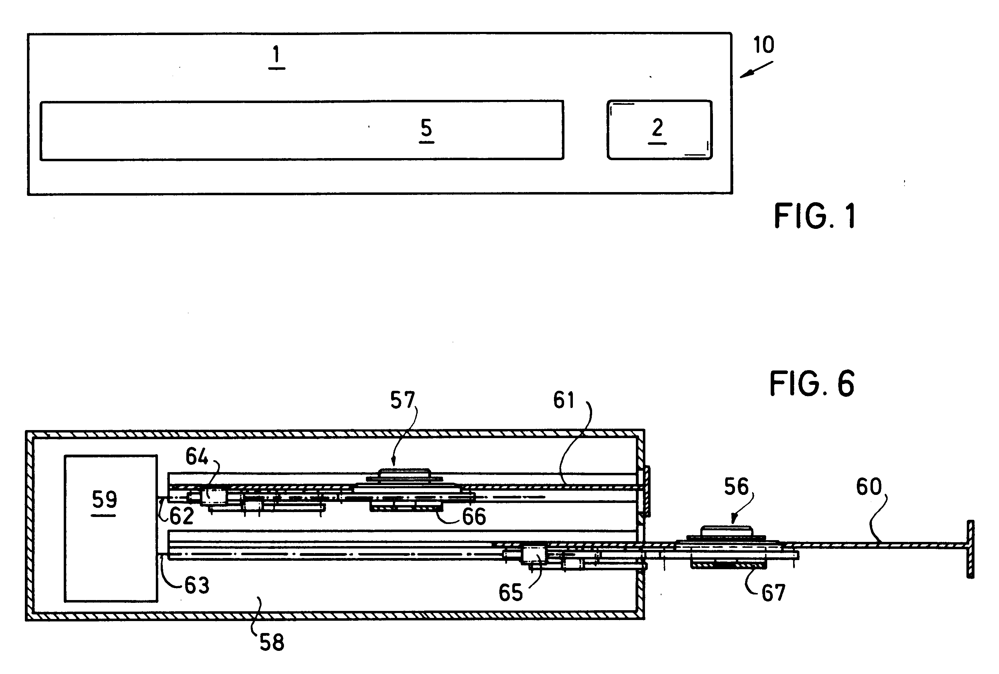

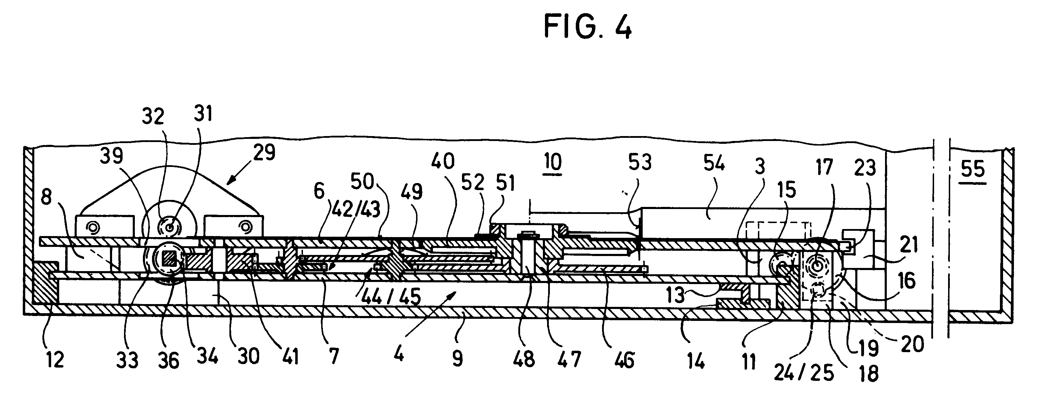

Mit 1 ist in FIGUR 1 die Frontwand eines Registriergerätes bezeichnet, welches mit der erfindungsgemäßen Anordnung ausgerüstet ist. Im einfachsten Falle ragt durch die Frontwand 1 eine von außen bedienbare, vorzugsweise als Leuchttaste ausgebildete Taste 2, mit der ein Motor 3 steuerbar ist, der die Aufgabe hat, einen den Diagrammscheiben zugeordneten Träger 4 zwischen einer Einlege- bzw. Entnahme- und einer Registrierposition zu transportieren. Der Träger 4 ist frontseitig mit einer Blende 5 versehen und besteht, wie FIGUR 4 zeigt, im wesentlichen aus zwei Platinen 6 und 7, die unter Verwendung von Distanzelementen, von denen eines in FIGUR 4 dargestellt und mit 8 bezeichnet ist, in geeigneter Weise miteinander verbunden sind.

Die eine - 7 - der beiden Platinen ist in am Boden 9 des Gehäuses 10 des Registriergerätes ausgebildeten oder befestigten, mit geeigneten, nicht näher bezeichneten Nuten versehenen Wangen 11 und 12 parallel zum Boden 9 geführt. Eine Führung parallel zu den Seitenwänden des Gehäuses 10 erfolgt mittels einer an der Platine 7 angebrachten Schiene 13, die in eine unmittelbar im Boden 9 ausgebildete oder in einem an dem Boden befestigten Teil 14 vorgesehene Nut eingreift. Diese Führung des Trägers 4 in zwei zueinander im wesentlichen senkrecht stehenden Ebenen bietet die für die Registrierqualität erforderliche hohe Führungsgüte.

Der Transport des Trägers 4 geht, wie bereits erwähnt, aus von dem Motor 3, einem Gleichstrommotor, der über eine Getriebestufe 15, 16 eine Gewindespindel 17 antreibt, die in mit dem Boden 9 verbundenen Lagerböcken 18 und 19 gelagert ist und über einen dem Träger 4 zugeordneten Arm 20 mit dem Träger 4 in getrieblicher Verbindung steht. Der Endabschaltung des Motors 3 dienen Lichtschranken 21 und 22, die mit einem an der Platine 6 ausgebildeten Finger 23 zusammenwirken. Zwei Federn 24 und 25, von denen eine in dem Arm 20 oder in einem Anschlag 26, die andere im Anschlag 18 befestigt ist, dienen der Dämpfung des Trägers 4 in den Endstellungen. Dabei wird mit dem Anschlag 26, mit dessen Ansatz 27 die Stirnfläche 28 der Platine 6 zusammenwirkt, die Registrierposition des Trägers 4 definiert. Anstelle der beiden Federn 24 und 25 ist auch eine im Arm 20 befestigte und beidseitig vorstehende Feder denkbar.

Der Registrierantrieb geht aus von einem Motor 29, welcher an einem geeigneten Ständer 30, der seinerseits ortsfest mit dem Boden 9 des Gehäuses 10 verbunden ist, angeflanscht ist. Das auf der Motorwelle 31 befestigte Ritzel 32 steht in Eingriff mit einem Zahnrad 33, das mit einer Profilwelle 34 verdrehfest verbunden ist. Auf der Profilwelle 34, die einerseits im Ständer 30, andererseits in einem Lagerteil 35 gelagert ist, ist eine Schnecke 36 verschiebbar angeordnet. An der Schnecke 36 sind beidseitig Flansche 37 und 38 angeformt, über die die Schnecke 36 mit wenigstens einer Aussparung 39 in einer der beiden Platinen 6 oder 7 des Trägers 4 in Eingriff steht. Auf diese Weise wird die Schnecke 36 vom Träger 4, wenn dieser transportiert wird, mitgenommen, bleibt aber in Eingriff mit dem vom Motor 29 ausgehenden Registrierantrieb. Die weitere Getriebekette des den Registrierantrieb auf die Diagrammscheibenaufnahme 40 übertragenden Laufwerks wird gebildet von einem mit der Schnecke 36 in Eingriff stehenden und auf dem Träger 4 gelagerten, schraubverzahnten Zahnrad 41, einem Zahnradpaar 42/43, einem weiteren Zahnradpaar 44/45 und einem Zahnrad 46. Letzteres ist mittels einer Buchse 47 gemeinsam mit der Diagrammscheibenaufnahme 40 auf einer an der Platine 7 des Trägers 4 befestigten Achse 48 gelagert. Mit 49 ist eine Feder bezeichnet, die eine ein Richten der Diagrammscheibenaufnahme 40 gestattende Friktionsverbindung zwischen den Zahnrädern 44 und 45 bewirkt was bei Verwendung von Diagrammscheiben mit aufgedruckter Uhrzeitskale erforderlich ist.

Das Bezugszeichen 50 ist einer von der Diagrammscheibenaufnahme 40 aufgenommenen Diagrammscheibe zugeordnet. Die Aufnahme einer Diagrammscheibe 50 erfolgt in dem dargestellten Ausführungsbeispiel durch Aufdrehen auf die an der Diagrammscheibenaufnahme 40 ausgebildeten Zentrier- und Mitnahmemittel 51, die durch ein mit ihnen verbundenes Ringsegment 52 als Ein-Gang-Gewinde ausgebildet sind. Gemäß FIGUR 4 ragt die Diagrammscheibenaufnahme 40 durch eine Öffnung 53 in der Platine 6 hindurch, derart daß der aufgenommenen Diagrammscheibe 50 die Platine 6 als Registrierunterlage dient. Eine als Rundstab ausgebildete Strebe 54 dient der Diagrammscheibe 50 als Niederhalter.

Der Übersicht halber und da sie nicht erfindungswesentlich sind, sind die Registrierorgane und deren Antriebe nicht dargestellt. Mit 55 ist eine vom Registrierraum abgetrennte Kammer des Gehäuses 10 bezeichnet, in der Bauelemente für die elektrische Meßwertverarbeitung des Registriergerätes untergebracht sind.

Um das Registriergerät lediglich von einem hierzu befugten Personenkreis bedienbar zu machen, kann dem Träger 4 beispielsweise ein Schloß zugeordnet werden. Auch ist es denkbar, für jede Transportrichtung des Trägers 4 eine Taste vorzusehen und eine zusätzliche Taste dazu zu benutzen, den Registrierantrieb der Diagrammscheiben auf verschiedene Registriergeschwindigkeiten umzuschalten.

Der Vollständigkeit halber sei noch erwähnt, daß das Registriergerät sowohl in horizontaler als auch in vertikaler Einbaulage benutzbar ist und daß der Antrieb des Trägers auch dadurch erfolgen kann, daß ein mit einem Federspeicher versehenes Hebelgetriebe vorgesehen ist. Durch Tastendruck kann der Transport des Trägers in die Einlegeposition ausgelöst werden. Ein Spannen des Federspeichers erfolgt durch Zurückschieben des Trägers in die Registrierposition von Hand.

Die schematische Darstellung des Registriergerätes gemäß FIGUR 6 zeigt zwei parallel zueinander geführte und unabhängig voneinander verschiebbare Träger, deren Diagrammscheibenaufnahmen 56 und 57 in jeder Stellung der Träger von einem ortsfest im Gehäuse 58 angeordneten Motor bzw. einem Laufwerk 59 angetrieben werden. Die Träger bestehen bei diesem Ausführungsbeispiel jeweils aus einer Platine 60 bzw. 61. Den Achsen der Diagrammscheibenaufnahmen 56 und 57 sind in diesem Falle geeignete Lagerbrücken zugeordnet, während die übrigen Räder der Antriebsverbindung jeweils fliegend an den Platinen 60, 61 gelagert sind.

Mit 62 und 63 sind vom Laufwerk 59 angetriebene Profilwellen bezeichnet, auf denen in der bereits beschriebenen Weise Schnecken 64 und 65 verschiebbar angeordnet sind. Die Bezugszeichen 66 und 67 bezeichnen die Lagerbrücken für die Diagrammscheibenaufnahmen 56 und 57.

## Patentansprüche

1. Registriergerät mit einem flachen Einbaugehäuse, dessen eine Schmalseite die Frontseite (1) des Registriergerätes bildet, mit einer mit Zentrier- und Mitnahmemitteln (48, 49) für die als Aufzeichnungsträger dienenden Diagrammscheiben (50) versehenen Diagrammscheibenaufnahme (40) und mit Mitteln (4), welche einen Transport der Diagrammscheibenaufnahme (40) im wesentlichen rechtwinklig zur Frontseite (1) des Registriergerätes zwischen einer Registrierposition innerhalb des Gehäuses und einer Einlege- bzw. Entnahmeposition außerhalb des Gehäuses gestatten, dadurch gekennzeichnet, daß ein den Registrierantrieb der Diagrammscheiben (50) liefernder Motor (29) ortsfest in dem Registriergerät angeordnet ist und daß zwischen dem Motor (29) und der Diagrammscheibenaufnahme (40) ein Getriebe (32, 41, 42/43, 44/45, 46) vorgesehen ist, derart daß der Registrierantrieb der Diagrammscheiben (50) in jeder Stellung der Diagrammscheibenaufnahme (40) gewährleistet ist.

2. Registriergerät nach Anspruch 1, dadurch gekennzeichnet, daß der Transport der Diagrammscheibenaufnahme (40) selbsttätig erfolgt und durch Betätigen einer Taste (2) steuerbar ist.

3. Registriergerät nach Anspruch 1, dadurch gekennzeichnet, daß das Getriebe zwischen dem Motor (29) und der Diagrammscheibenaufnahme (40) eine auf einer Profilwelle (34) verschiebbar angeordnete Schnecke (36) umfaßt.

4. Registriergerät nach Anspruch 1, dadurch gekennzeichnet, daß die Diagrammscheibenaufnahme (40) und die sie mit der verschiebbaren Schnecke (36) verbindende Getriebekette an einem Träger (4) gelagert sind, welche einerseits die Registrierunterlage bildet, andererseits im Gehäuse (10) des Registriergerätes verschiebbar geführt ist.

5. Registriergerät nach Anspruch 1, dadurch gekennzeichnet, daß mehrere unabhängig voneinander bewegbare Träger (4) vorgesehen sind, denen jeweils ein Motor (29) für den Registrierantrieb und ein Motor (3) für den Transport zugeordnet sind.

## Claims

1. Recording device, having a flat mountable housing, one narrow side of which forms the front side (1) of the recording device, having a graph chart receiver (40) which is provided with centring and entraining means (48, 49) for the graph charts (50) serving as record carriers, and having means (4) which enable the graph chart receiver (40) to be transported substantially at right angles with respect to the front side (1) of the recording device between a recording position within the housing and an insertion or removal position outside the housing, characterized in that a motor (29) supplying the recording drive of the graph charts (50) is arranged fixed in the recording device, and in that a gear mechanism (32, 41, 42/43, 44/45, 46) is provided between the motor (29) and the graph chart receiver (40), such that the recording drive of the graph charts (50) is ensured in any position of the graph chart receiver (40).

2. Recording device according to Claim 1, characterized in that transporting of the graph chart receiver (40) is effected automatically and is controllable by operating a key (2).

3. Recording device according to Claim 1, characterized in that the gear mechanism comprises a screw (36) displaceably arranged on a profiled shaft (34) between the motor (29) and the graph chart receiver (40).

4. Recording device according to Claim 1, characterized in that the graph chart receiver (40) and the gear chain connecting it to the displaceable screw (36) are mounted on a carrier (4) which on the one hand forms the recording base surface and on the other hand is guided displaceably in the housing (10) of the recording device.

5. Recording device according to Claim 1, characterized in that there are provided a plurality of carriers (4) which may be moved independently of one another and with which a respective motor (29) for the recording drive and a motor (3) for transporting are associated.

## Revendications

1. Appareil enregistreur avec un boîtier d'encastrement plat dont l'une des faces étroites constitue la face frontale (1) dudit appareil enregistreur, avec un dispositif de réception de disques de diagramme (40) doté de moyens de centrage et d'entraînement (48, 49) pour lesdits disques de diagramme (50) servant de supports d'enregistrement et avec des moyens (4) qui permettent un transport du dispositif de réception de disques de diagramme (40) pour l'essentiel perpendiculairement à la face frontale (1) de l'appareil enregistreur entre une position d'enregistrement à l'intérieur du boîtier et une position de mise en place ou de prélèvement à l'extérieur du boîtier, caractérisé par le fait qu'un moteur (29) fournissant l'entraînement des disques de diagramme (50) est monté à demeure dans l'appareil enregistreur et qu'entre le moteur (29) et le dispositif de réception de disques de diagramme (40) est prévu un engrenage (32, 41, 42/43, 44/45, 46) de telle sorte que l'entraînement d'enregistrement des disques de diagramme (50) soit assuré dans chaque position du dispositif de réception de disques de diagramme (40).

2. Appareil enregistreur selon la revendication 1, caractérisé par le fait que le transport du dispositif de réception de disques de diagramme (40) se fait automatiquement et peut être commandé par l'actionnement d'une touche (2).

3. Appareil enregistreur selon la revendication 1, caractérisé par le fait que l'engrenage disposé entre le moteur (29) et le dispositif de réception de disques de diagramme (40) comprend une vis sans fin (36) montée de manière déplaçable sur un arbre à profilés (34).

4. Appareil enregistreur selon la revendication 1, caractérisé par le fait que le dispositif de réception de disques de diagramme (40) et le train d'engrenages le reliant à la vis sans fin déplaçable (36) sont montés sur un support (4) qui constitue, d'une part, la table porte-graphique et est guidé, d'autre part, de manière déplaçable dans le boîtier (10) de l'appareil enregistreur.

5. Appareil enregistreur selon la revendication 1, caractérisé par le fait qu'il est prévu plusieurs supports (4) déplaçables indépendamment les uns des autres auxquels est associé respectivement un moteur (29) pour l'entraînement d'enregistrement et un moteur (3) pour le transport.

EP 0 309 854 B1

FIG. 1

FIG. 6

FIG. 2

FIG.3

## FIG. 4

FIG. 5

EP 0 309 854 B1